(19) Europäisches Patentamt
European Patent Office
Office européen des brevets

(11) Publication number: **0 172 472 B1**

(12) **EUROPEAN PATENT SPECIFICATION**

(45) Date of publication of patent specification: **22.01.92**

(51) Int. Cl.[5]: **C08F 8/40**, G11B 5/702

(21) Application number: **85109686.7**

(22) Date of filing: **01.08.85**

# (54) Novel phosphorylated reaction products and compositions incorporating such products.

(30) Priority: **02.08.84 US 636895**

(43) Date of publication of application:
**26.02.86 Bulletin 86/09**

(45) Publication of the grant of the patent:
**22.01.92 Bulletin 92/04**

(84) Designated Contracting States:
**AT BE CH DE FR GB IT LI LU NL SE**

(56) References cited:
**EP-A- 0 112 924** **EP-A- 0 112 925**
**DE-A- 2 234 822** **DE-B- 1 005 754**
**FR-A- 1 444 620** **US-A- 3 911 196**

(73) Proprietor: **UNION CARBIDE CORPORATION**
**39 Old Ridgebury Road**
**Danbury Connecticut 06817(US)**

(72) Inventor: **Colon, Ismael**
**57 Curtis Avenue**
**Piscataway New Jersey 08854(US)**
Inventor: **Mallon, Charles Bernard**
**290 Shelburne Place**
**Belle Mead New Jersey 08502(US)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to novel phosphorylated reaction products and, more particularly, to novel products for use in compositions such as magnetic recording for enhancement of the dispersion and magnetic property characteristics of such medium.

Over the years, magnetic recording has come to occupy a vital place in a myriad of industries. Magnetic tape is accordingly utilized for audio, video, computer, instrumentation and other recordings. Magnetic recording media are utilized in a variety of forms, including, for example, magnetic cards and disks, reels, video tapes, high performance audio tapes, computer tapes, floppy disks and the like.

While there are several different types of magnetic recording media, all types consist of a layer of magnetic particles, sometimes referred to as "pigment", coated on a plastic, paper or metal base. Information to be recorded is stored in the magnetic pigment applied to the base as a series of small domains magnetized by a recording head. The coating layer of the magnetic pigment includes a binder system which provides a cohesive matrix between the magnetic pigment particles and adheres such particles to the base.

The magnetic coating is applied to the base by coating equipment such as, for example, a gravure roll coater, and the coated base then typically immediately proceeds to a magnetic orientation step wherein orientation of the pigment particles is effected on the undried layer. In this step, the long axis of the pigment particles, typically acicular crystals, is made to coincide with the magnetization direction.

In order to achieve good recording performance, the magnetic coating must possess a wide variety of characteristics. Pigment particles, desirably of relatively uniform particle size, should form as high a proportion of the coating layer as possible. Further, the degree of dispersion of the pigment particles in the coating, often evaluated as degree of gloss, should be as high as possible. Further, the highly dispersed pigment particles must be capable of being adequately oriented as previously described (the degree of orientation often measured as "squareness").

Still further, the adhesion and wear resistance of the magnetic coating or film should be high. Also, the coefficient of friction of the magnetic surface should be low against the head material, and yet have an adequate value against the driving media such as pitch rollers and capstan rollers.

Satisfying these and other diverse criteria have proven to require a delicate balance of basically reciprocal, or opposing, properties. A substantial amount of effort over the years has been directed to improving the various characteristics of magnetic recording media.

To satisfy the performance criteria, the binder system must possess adequate modulus, yet have satisfactory tensile strength and resilience. It has generally been found more desirable to satisfy these criteria by utilizing more than one material in the binder system. Typically, a polymer of relatively high molecular weight which is capable of being cross-linked or cured is utilized to provide the desired modulus. Various elastomers are also incorporated to achieve the desired resilience and tensile strength.

Conventional binder systems include a wide variety of high Tg (viz. - glass transition temperature) hardening polymers or resins, such as, for example, polyacrylates, polyesters, polyester amides, polyhydroxyethers and copolymers from monomers such as vinyl chloride, vinyl acetate, acrylonitrile, vinyl alcohol, vinyl butyral, and vinylidene chloride in combination with low Tg elastomeric polymers, including nitrile rubbers, polyesters, alkyd resins and polyester polyurethanes. The latter elastomers often represent the material of choice for high performance applications. Such resins have excellent toughness and abrasion resistance.

Typically, the hardening polymers contain hydroxyl functionality since cross-linking to further increase the modulus, durability and abrasion resistance characteristics can then be achieved by using polyfunctional isocyanates. While satisfactory cross-linking can be achieved with polyfunctional isocyanates, such materials are notoriously sensitive to moisture which can cause problems. Also, cross-linking occurs over a period of time, including while the magnetic recording medium is in storage. Premature cross-linking may also make calendering of the recording medium difficult or impossible.

It would accordingly be desirable to provide a binder resin capable of being cured or cross-linked by electron beam radiation techniques. Various electron beam curable, multifunctional acrylates and methacrylates are known. The difficulty is the method by which such materials may be utilized since these materials have mechanical properties and surface wear resistance characteristics that are generally considered inadequate for magnetic coatings.

The degree of dispersion and the capability of the pigment particles to be oriented in many binder systems are often considered inadequate in the absence of dispersion aids. A wide variety of techniques have been proposed to improve these characteristics. Thus, many surface active agents have been employed for this purpose. These include higher aliphatic amines, higher fatty acids, phosphoric acid esters

of higher alcohols such as polyoxyethylene phosphate alkyl ethers, esters of higher fatty acids and sorbitol, sodium alkylbenzenesulfonate, betaine-type, nonionic surface active agents and the like.

Magnetic coatings obtained by employing such surface active agents generally exhibit uniform dispersion of magnetic powder as well as good orientation where the powder or pigment is in the form of acicular particles. On the other hand, utilization of such agents often adversely affects wear resistance or causes difficulties in quality during use. These problems are often attributed to migration or blooming of such surface active agents to the magnetic coating surface or to unnecessary plasticization of the hardening resin or of other components in the magnetic coating.

One attempt to obviate the migration problem is suggested by Great Britain Patent 2,097,415A. This suggests using with a cross-linkable or polymerizable resin binder a phosphoric acid ester having at least one polymerizable unsaturated double bond. Preferably, the phosphoric acid ester is a product obtained by reacting a phosphoric acid ester of a compound having two or more hydroxyl groups with an acrylic or methacrylic compound having a functional group reactive with an isocyanate group and also with a polyisocyanate compound. The phosphoric esters disclosed include two major types: (1) the reaction products of a long chain alkylether or polyester, an acrylic or methacrylic compound having a functional group reactive with an isocyanate group, and a polyisocyanate compound and (2) phosphoric esters of hydroxyalkyl acrylates.

Other binder systems disclosed utilize compounds including various hydrophilic groups such as sulfates, sulphonates, phosphonates and the like. Japanese application 116,474 discloses a magnetic layer binder composition of a polyurethane and optionally a polyester containing sulphonate groups, and a vinyl chloride polymer containing sulphonate, sulphate, carboxylate or phosphonate groups. The binder is stated to have good dispersing function to magnetic powder and the recording medium to have excellent service durability and good surface gloss.

Japanese Patent J57092421-A(8229) discloses a magnetic recording medium which includes a polyester urethane having (1) at least one hydrophilic group such as $-SO_3M$, $-OSO_3H$, -COOM, $-P(O)(OM')_2$, $-NH_2$, -NHR, $NR_1R_2$, $+NR_1R_2R_3$, wherein M may be H, Li, Na or K; M' may be H, Li, Na, K or a hydrocarbon group; and the R groups may be a hydrocarbon group and (2) at least two acrylic type double bonds.

Japanese J57092422-A(8229) discloses a magnetic layer containing a polyurethane or polyester resin having (1) at least one hydrophilic group selected from $-OSO_3H$, -COOM, $-P(O)(OM')_2$ wherein M may be H, Li, Na, K and M' may be H, Li, Na, K or a hydrocarbon group and (2) a molecular weight of 200 to 5000 per hydrophilic group.

International Publication No. W08400240-A discloses a magnetic recording medium containing a polyvinyl chloride-vinyl acetate-vinyl alcohol and a polyurethane resin containing polar groups such as $-SO_3M$, $-OSO_3M'$ -COOM or

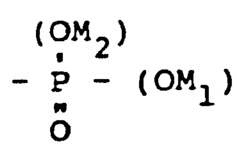

wherein M may be H, Li, Na or K and $M_1$ and $M_2$ may be Li, Na, K or an alkyl group, preferably an alkyl group with up to 23 carbon atoms.

Japanese J55117734-A(8043) discloses a binder for a magnetic recording medium which contains a copolymer of a phosphoric acid ester of an alkylene glycol acrylate or an alkylene glycol methacrylate and a copolymerizable monomer. The wetting properties to ferromagnetic material is stated to be very good, so that dispersibility in the binder is improved. Blooming is said not to occur as no high aliphatic acid, metallic soap, or the like is used.

Among the binder polymers in use in magnetic coating media are commercially available, partially hydrolyzed, (viz. - partly saponified) vinyl chloride - vinyl acetate copolymers and terpolymers and phenoxy resins. For the highest performance applications, such as computer tapes, floppy disks and the like, phenoxy resins are often the binder resin of choice because of the superior durability, toughness and thermal stability that is provided.

Unfortunately, the dispersion and orientation characteristics of coatings utilizing such binder polymers are typically less than is desired. Considerable efforts have been undertaken to improve these characteristics with the use of a wide variety of dispersion aids.

U.S. 4,420,537 to Hayama et al. thus discloses a magnetic recording medium including a commercially available vinyl chloride-vinyl acetate-vinyl alcohol copolymer and a phosphoric ester type anionic surfactant

(e.g. - "GAFAC RE 610"). It is noted that when the content of the surfactant is more than 5 weight percent of the coating, the surfactant is bloomed out from the magnetic layer.

U.S. 4,153,754 to Huisman notes difficulties with prior dispersing agents. Low molecular weight agents, such as lecithin, have the disadvantage that an excess is necessary to fully cover the particles to be dispersed. The high molecular weight dispersing agents, as described, for example in Netherlands Patent Application No. 65.11015, have the disadvantage that, due to their poor wetting properties, agglomerates of the particles are also covered with a dispersing agent. It is not readily possible, or it is possible only by the use of much energy, to disintegrate such agglomerates to individual particles. Huisman suggests using an N-acylsarcosine derivative as a dispersing agent with the binders. The Examples show use of such a dispersing agent with a commercially available phenoxy resin and a vinyl chloride-vinyl acetate-vinyl alcohol terpolymer.

U.S. 4,291,100 to Horigome et al. discloses a magnetic recording medium utilizing a polyoxyethylenesorbitane higher fatty acid ester surfactant. The Examples include use of such surfactants with vinyl chloride-vinyl acetate copolymers and vinyl chloride-vinyl acetate-vinyl alcohol terpolymers.

U.S. 4,305,995 to Ota et al. shows a magnetic recording medium including a mixture of sorbitane mono-,di- and tri- higher fatty acid ester surfactants. The Examples show use of such surfactants with vinyl chloride-vinyl acetate copolymers.

U.S. 4,330,600 to Kawasumi et al. discloses a magnetic recording medium in which the dispersion characteristics of magnetizable particles are improved which results in improved saturation magnetic flux density and squareness ratio. These are achieved by treating the magnetizable particles with a titanium alcoholate compound having at least one group which is easily hydrolyzed and at least one oleophilic group which is hard to hydrolyze in an organic solvent. The Examples show use of such titanium alcoholates with a commercially available vinyl chloride-vinyl acetate copolymer binder.

U.S. 4,400,435 to Yoda et al. notes that vinyl chloride-vinyl acetate copolymers have been used as binders, but that such copolymers do not have functional groups whereby it is easy to improve the dispersibility of magnetic powder in a magnetic layer. It is further said that it is not easy to carry out a thermosetting reaction. The use of vinyl chloride-vinyl acetate-vinyl alcohol copolymers instead had been proposed; and, because of the hydroxyl groups present, the dispersibility of magnetic powder is improved and the thermosettable reaction can be performed. However, because of the vinyl alcohol component, the glass transition temperature of the copolymer is disadvantageously high so as to provide difficulties in improving the surface properties by a calender process. A magnetic recording medium having improved orientation and maximum residual magnetic flux density is provided by using a vinyl chloride-vinyl acetate-maleic acid copolymer having a content of the maleic acid component of at least 1.5 percent.

In addition to the problems of providing a binder system in which the pigment particles can be highly dispersed to form a magnetic coating in which such particles can then be readily oriented in the first instance, the manner of usage can create further problems. Thus, achieving adequate dispersion requires use of relatively high energy mixing equipment. As one example, a mixture of the binder system in a solvent is provided, and the mixture is then thoroughly kneaded and agitated on a 3-roll or high speed agitation mixer or kneader. The resulting slurry is then often transferred to a ball mill, sand grind mill or other dispersion equipment to achieve an even higher degree of dispersion of the magnetic particles in the coating.

If the coating is used rather promptly after formation, no problem results. However, as is sometimes the case, usage requirements may dictate that the coating mixture be stored. Such storage can result in substantial decay of the advantageous dispersion characteristics originally achieved. The use of such "stale" coating mixtures thus presents problems as regards the processing required to allow the pigment particles to attain the desired orientation when such coating mixtures are used and processed. It is obviously economically undesirable to be forced to repeat the initial, high energy mixing sequence.

Accordingly, despite the considerable prior effort in this field, the need remains for a straightforward solution that will allow use of otherwise desirable binders to achieve the desired dispersion and orientation characteristics over a widespread variety of usage requirements.

A principal object of the present invention is to provide novel phosphorylated compositions for use in applications such as a magnetic coating to impart desirable dispersion and orientation characteristics.

A further object of this invention provides a novel binder system for a magnetic recording medium which may be substituted for conventional binders in formulations as essentially a plug-in substitution.

Yet another object lies in the provision of novel phosphorylated compositions that may be obtained by utilizing a straightforward, facile synthesis.

Another object of the present invention is to provide a binder system for magnetic recording medium which minimizes or eliminates the need to employ a dispersing agent which can cause blooming in use.

A still further object lies in the provision of a magnetic coating which is capable of being processed in conventionally utilized magnetic coating equipment.

Yet another object lies in the provision of a magnetic coating which may be stored for extended periods of time and yet may be readily processed to provide, upon usage, the desired magnetic characteristics.

Another object is to provide a binder system capable of being cross-linked or cured by electron beam radiation. A related object is to provide a hardening resin that is curable by electron beam radiation and which further provides desirable dispersion characteristics.

A further object of the present invention lies in the provision of a dispersing agent which can be chemically combined within the binder system to obviate migration or blooming in the cured coating.

These and other objects of the present invention are achieved by the composition of Claim 1.

The present invention is based on the discovery that conventional vinyl chloride-vinyl ester copolymers and terpolymers and certain lactone adducts may be phosphorylated to provide magnetic recording media having desirable dispersion and magnetic characteristics. Such phosphorylated compositions can be synthesized in a straightforward, facile manner and can provide a magnetic coating having the viscosity and other characteristics that allow usage in conventional magnetic coating equipment. Inclusion in conventional magnetic coating formulations does not require significant change. By suitable selection in the synthesis, the resulting binder system should be capable of being cured by electron beam radiation. The resulting system may also be stored for extended periods of time before usage, and the system may thereafter be readily treated with a relatively low molecular weight phosphorylated material of this invention to allow achievement of the necessary magnetic characteristics. The relatively low molecular weight phosphorylated material may likewise be used as an additive in conventional binder systems for the same purpose. By suitable selection of the low molecular weight phosphorylated material for the particular curing technique to be employed, such materials will be chemically combined in the cured coating and will not bloom or migrate.

In accordance with one aspect of the present invention, the hardening resin utilized to provide the requisite modulus and other strength characteristics is suitably phosphorylated to provide characteristics adequate to achieve the requisite pigment dispersion and magnetic properties. In accordance with another aspect of this invention, a phosphorylated dispersant material capable of reaction directly or indirectly with the binder utilized is employed.

As used herein, the term "phosphorylation" means the conversion of hydroxyl groups to phosphates. Accordingly, the phosphorylated compositions of the present invention can be likewise considered as phosphate esters.

In accordance with the present invention, the resin starting material selected is suitably phosphorylated to provide the desired magnetic coating component. Conceptually, the extent of phosphorylation should be sufficient to improve the pigment wetting properties of the resin. The phosphorylated resin will thus assist in achieving the desired dispersion and magnetic characteristics in the magnetic coating. The extent to which the resins are phosphorylated is not particularly critical but will depend on a number of factors insofar as the utility of the phosphorylated resin in the preparation of magnetic coatings is concerned. To that end, the extent or level of phosphorylation must be such that the phosphorylated resin is soluble in the aprotic solvents conventionally used in preparing magnetic coatings in an amount sufficient to provide the desired binder system and to permit application of the binder system to the desired base. The degree of phosphorylation should generally likewise be such that the glass transition temperature of the phosphorylated resin is not significantly lower than about 70° C. in order to insure the proper modulus of the coating. Further, the degree of phosphorylation must be such that the phosphorylated resin remains compatible with other components of the binder system, particularly the elastomeric polymer employed, such as a polyurethane and the like.

A further consideration concerning the level of phosphorylation is the curing technique that will be employed. Thus, if a conventional polyisocyanate cure is to be utilized, adequate hydroxyl functionality should remain to allow sufficient cross-linking to be carried out. Further, even with synthesizing resins to be cured by other than the polyisocyanate technique, it has been found desirable to utilize a less than fully phosphorylated derivative. Such derivatives appear to provide in a magnetic recording medium more desirable dispersion and magnetic property characteristics.

Consistent with these parameters, phosphorylation of about 1 to about 80% of the hydroxyl groups present in the resin should be suitable for materials intended to be isocyanate-cured, the remaining unphosphorylated hydroxyl groups providing active sites for reaction with the isocyanate. On the other hand, use of reaction products wherein complete phosphorylation of the hydroxyl groups has been obtained is possible where the resin is curable by electron beam radiation since the hydroxyl groups do not enter into the curing reaction.

It has been found suitable to phosphorylate about 5 percent, more desirably, about 10 to 20 percent of the hydroxyl groups present. This level of phosphorylation can be obtained by suitably adjusting the relative amounts of the resin and the phosphorylating agent employed.

The temperature at which the phosphorylating reaction is carried out is not critical but is dependent on the phosphorylating agent employed. In general, however, it is desirable that the phosphorylation reaction be carried out at elevated temperatures to provide adequate reaction of the hydroxyl groups and insure complete reaction, suitable temperatures being about 50 °C. to about 200 °C. In carrying out the phosphorylation, the reaction should utilize a phosphorylating agent and conditions that will avoid forming significant amounts of higher molecular weight specie, as would result when two molecules are linked together through the phosphate moiety. The presence of such high molecular weight specie can result in systems having undesirably high viscosities. This is obviously of greater significance when the resin starting material is already of a relatively high molecular weight.

Suitable phosphorylation agents include phosphoryl chloride and its derivatives: $PO(OR^2)_{n'}\ Cl_{3-n'}$, wherein n' is 0, 1, 2, or 3 and $R^2$ is hydrogen, a saturated or unsaturated hydrocarbon radical having from 1 to about 20 carbon atoms, a cycloalkyl radical of from 1 to about 20 carbon atoms, an alkyl acrylate or methacrylate in which the alkyl radical is from 1 to about 10 carbon atoms, aryl and substituted aryl of from 6 to about 20 carbon atoms and adducts of hydroxyalkyl acrylates and methacrylates and a lactone (as described more fully hereinafter), and mixtures thereof, or phosphorus pentoxide or the reaction product of phosphorus pentoxide with a hydroxyl-containing material, including water, saturated or unsaturated alcohols having from 1 to 20 carbon atoms, hydroxyalkyl acrylates or methacrylates having from 2 to 10 carbon atoms, substituted and unsubstituted phenols and adducts of hydroxyalkyl acrylates and methacrylates and a lactone which will be described more fully hereinafter, and mixtures thereof.

The phosphorylation reaction may be carried out in any of a variety of aprotic solvents. Suitable examples include methylethylketone, tetrahydrofuran and cyclohexanone. The amount of the resin starting material added to the aprotic solvent may be varied within a wide range, provided the material is soluble in the solvent and the viscosity of the solution is not so high as to prevent stirring. In general, a level of about 25 weight percent has been satisfactorily employed. The relative amounts of the phosphorylating agent and the resin may be selected to provide the desired level of phosphorylation.

Suitable selection of the phosphorylating agent will allow preparation of a phosphorylated resin capable of being cured by electron beam radiation. Thus, when the phosphoryl chloride or phosphorus pentoxide derivatives previously set forth include a residue of an electron beam curable acrylate or methacrylate, the resulting phosphorylated resin should be capable of being cured by electron beam radiation.

## Vinyl Resins

A variety of vinyl chloride-vinyl ester copolymers and terpolymers have been previously utilized in magnetic recording media. The number average molecular weight should be at least about 1000, more typically at least about 2000 and particularly at least 4,000, preferably at least about 8000 and more preferably at least 23000. Resins with number average molecular weights up to about 25,000 are commercially available. Conventionally, only the higher molecular weight materials, for example, those having a molecular weight greater than about 15 000 or so, are used as hardening resins in magnetic recording media. Especially suitable vinyl chloride-vinyl ester copolymers or terpolymers are those in which some or all of the ester groups have been hydrolyzed. In general, such copolymers and terpolymers consist of vinyl chloride, a vinyl ester and vinyl alcohol, preferably in the molar ratio of about 28-32 vinyl chloride to 0.5-8 vinyl alcohol to 0 to 4 vinyl ester. Vinyl esters suitably used in the preparation of these terpolymers include vinyl formate, vinyl acetate, vinyl propionate, vinyl butyrate and the like. Other higher vinyl esters up to about 6 carbon atoms likewise may be used.

Other equally suitable copolymers and terpolymers are hydroxyalkyl acrylate and methacrylate modified vinyl chloride polymers such as the uniformly random hydroxyl-functional copolymers or terpolymers of vinyl chloride, hydroxyalkyl acrylate or methacrylate having 2 to 5 carbons in the alkyl segment, and vinyl esters of carboxylic acids of 1-6 carbon atoms, such as vinyl acetate, vinyl propionate and the like. Suitable hydroxyl-functional copolymers and terpolymers are described in US-A-3 884 887 and 3 755 271. In general, the molar ratio of the components of such copolymers and terpolymers is about 12-20 vinyl chloride to 0-3 vinyl ester to 1-3 hydroxyalkylacrylate or methacrylate.

Specific examples of suitable vinyl chloride copolymers and terpolymers are a vinyl chloride-hydroxyethyl acrylate copolymer, vinyl chloride-hydroxypropyl acrylate copolymer, vinyl chloride-hydroxyethyl acrylate-vinyl acetate copolymer or vinyl chloride-hydroxypropyl acrylate-vinyl acetate terpolymer.

The vinyl chloride-vinyl ester and vinyl chloride-vinyl ester-hydroxyalkyl acrylate and methacrylate

copolymers and terpolymers described above will be sometimes referred to hereinafter as the "vinyl resins."

In accordance with the present invention, the vinyl resin starting material selected is suitably phosphorylated to provide the desired magnetic coating component. Due to the thermal stability characteristics of such materials, the phosphorylation reaction should be carried out at a temperature and under such conditions as to avoid significant degradation of the vinyl resin. The phosphorylation reaction temperature may be varied depending on the composition and molecular weight of the vinyl resin, the phosphorylating agent used, and also on the presence or absence of thermal stabilizers known to those skilled in the art, the use of such stabilizers allowing the reaction to be carried out at temperatures higher than would otherwise be desirable due to the thermal stability characteristics of the vinyl resins.

The phosphorylation reaction may be carried out by dissolving the starting vinyl resin in an aprotic solvent to which the desired phosphorylating agent is added with stirring. The reaction may proceed at room temperature with stirring until the reaction is complete.

Suitable phosphorylating agents include phosphorus pentoxide, phosphorus pentoxide derivatives, and phosphoryl chloride and its derivatives, as has been previously described

Alternatively, in the case of a hydroxyalkyl acrylate or methacrylate modified vinyl chloride copolymer or terpolymer, the acrylate or methacrylate may be initially phosphorylated. The phosphorylated intermediate may then be used to either synthesize the desired copolymer or terpolymer, or may be employed as a phosphorylating agent for any of the vinyl chloride polymers described herein. This is likewise true when other hydroxy-functional monomers are used.

In carrying out the phosphorylation of the vinyl resins, the reaction should utilize a phosphorylating agent and conditions that will avoid the formation of significant amounts of higher molecular weight specie as would result when two of the starting vinyl resins are linked through the phosphate moiety. Inclusion of small amounts of water in the reaction mixture prevents the formation of such specie. Typically, the vinyl resins, as prepared and as commercially available, contain a small amount of water which is sufficient to prevent the formation of such specie. However, the relatively high level of water sometimes present in such vinyl resins generally results in the inefficient utilization of the phosphorylating agent. As an alternative, the vinyl resins may be dried and the level of water optimized to maximize the utilization of the phosphorylating agent while still preventing the formation of significant amounts of the high molecular weight specie.

Also, as has been previously described, the degree of phosphorylation can vary widely but should be sufficient to improve the pigment wetting properties of the vinyl resins. With respect to the higher molecular weight materials, e.g., about 8000 or greater, the Tg of these materials should generally not be lowered to significantly less than 65 °C. With respect to lower molecular weight materials, that is, those of about 8000 or less, the Tg of the vinyl resin when cross-linked or cured should likewise not be significantly less than 65 °C., again to insure the desired modulus of the coating.

The level or degree of phosphorylation suitable to provide the desired characteristics will generally be such that, based on the weight of the phosphorylated vinyl resin, the phosphorus content of the material may be as low as about 0.03% by weight, more desirably at least about 0.1% and even more desirably at least about 0.3%. Levels as high as about 1% by weight are typically preferred, and levels up to perhaps even as high as about 3% by weight may be suitable.

When the starting material selected has an adequate molecular weight to provide the requisite modulus and other characteristics for the particular magnetic recording medium application, an essentially plug-in substitution in the conventional formulations using such starting materials as hardening resins may be utilized. However, even starting materials of lower molecular weights will of course be suitable although conventional hardening resins may be needed to build the desired modulus for the particular application. Alternatively, building of the modulus of the lower molecular weight materials may be achieved during the curing process.

## Lactone-Hydroxyalkyl Acrylate or Methacrylate Adducts

In accordance with another aspect of the present invention, a magnetic recording medium characterized by superior dispersion and magnetic property characteristics may be achieved by utilizing in the preparation a phosphorylated lactone-adduct.

The lactone-acrylate adduct of this invention and suitable for use as a dispersing agent in magnetic media is the reaction product of a lactone and a hydroxyalkyl acrylate or methacrylate. The lactone-acrylate adduct may be represented by the following formula:

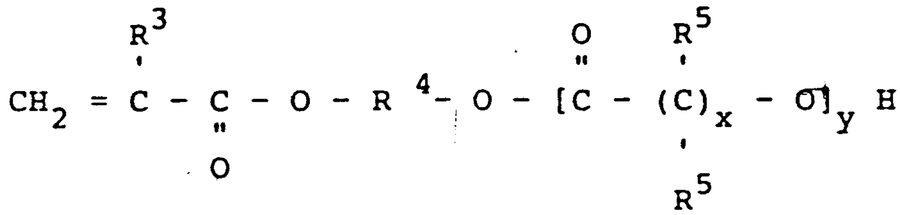

wherein

$R^3$ is hydrogen or methyl,

$R^4$ is an alkyl group of from 2 to about 10 carbon atoms,

$R^5$ is independently hydrogen or an alkyl group of from 1 to about 12 carbon atoms,

x is an integer of from 4 to 7, and

y is an integer of from 1 to 10.

The lactones suitable for use in preparing the lactone-acrylate adduct are characterized by the following formula:

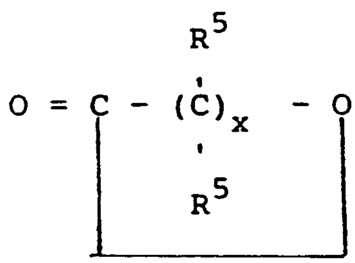

wherein $R^5$ is independently hydrogen or an alkyl radical of from 1 to 12 carbon atoms, and x is from 4 to 7. The preferred lactone is epsilon-caprolactone.

The hydroxyalkyl acrylates and methacrylates which may be used include 2-hydroxyethyl acrylate and methacrylate, hydroxypropyl acrylate and methacrylate, hydroxybutyl acrylate and methacrylate, 2-hydroxy-3-chloro-propyl acrylate and methacrylate, 2,3-dihydroxy propyl acrylate and methacrylate, and the like, or mixtures thereof.

Specific examples of suitable hydroxyalkyl acrylate or methacrylate-lactone adducts are adducts of hydroxyethyl acrylate and epsilon-caprolactone, wherein y has an average value of from about 1 to 4, preferably about 2.

As is known, the reactivity of the acrylates to electron beam radiation is superior to that of the methacrylates, thus the acrylates will generally be preferred. Hydroxyethylacrylate is particularly preferred. Also, if desired, in the formula previously set forth, the terminal methylene group could have one of the hydrogen atoms replaced by a methyl group. The resulting adduct would likely be less reactive to electron beam radiation than acrylates or methacrylates.

The phosphorylation technique employed may be that described in conjunction with the preparation of phosphorylated vinyl resins.

The resulting phosphorylated lactone-adduct provides superior dispersibility of the pigment particles in the magnetic coating and yields a magnetic coating capable of being satisfactorily oriented to provide the desired magnetic property characteristics. Such dispersants are of particular value, as well, in recovering the decayed properties of magnetic coatings which have been stored prior to usage.

## Reaction Product Design Considerations

It should of course be appreciated that the extent of phosphorylation desired must take into account the degree of conversion that will be achieved with the particular process conditions employed.

With vinyl resins, the conversion levels obtained will vary widely, depending upon the process conditions and the reactivity of the phosphorylating agent employed. Under the conditions used in the Examples herein, conversions on the order of 10 to 20% should be obtained. Adjustment of the concentrations of the reactants used should take such conversion levels into account. The particular conversion obtained in a given situation should be capable of being determined in a straightforward manner

by analysis.

In the case of the lactone-adducts, the reaction temperature is a principal factor in the conversion obtained. While ambient conditions result in incomplete conversion, reaction at an elevated temperature should achieve essentially complete conversion. At any rate, where incomplete conversion is obtained, the phosphorylated materials may be readily separated by known techniques, if desired.

Separation in the case of the reaction products resulting from phosphorylation of vinyl resins need not be considered. As long as the reaction product has the desired level of phosphorylated material, the reaction product may be directly used in magnetic coatings.

Description of the Phosphorylated Products

It can be seen from the description of the phosphorylating agents described above that phosphorus may be included in the phosphorylated vinyl resins and lactone-adducts of the present invention in the form of a wide variety of phosphorus ester moieties, characterized by the formula:

$$-\overset{\overset{\displaystyle O}{\|}}{P}-(OR^6)_2$$

wherein $R^6$ comprises hydrogen, an alkyl or alkenyl radical having from 1 to 20 carbon atoms, an alkyl acrylate or methacrylate residue having from 2 to 10 carbon atoms in the alkyl segment, substituted and unsubstituted phenyl, the lactone-adduct described herein, or mixtures thereof. Specific examples for alkyl groups $R^6$ are ethyl and n-butyl.

The formula for the phosphorus moieties represents an idealized formula. Depending upon the reaction conditions and the particular phosphorylating agent employed, the resulting reaction product comprises a distribution of mono-, di- and tri-phosphate esters. Accordingly, in the idealized formula, $R^6$ may be solely hydrogen (providing a phosphate monoester), a mixture of hydrogen and the hydrocarbon residue of the hydrocarbon from which the derivative was prepared (providing a diester), or solely the hydrocarbon residue (providing a triester). For the purpose of the present invention, the phosphorus moiety will be described in terms of the formula set forth, wherein the formula is used to represent the reaction product, including those situations wherein a complex mixture or distribution of compositions is obtained.

Magnetic Recording Medium

Base

Any base or substrate may be utilized, and the particular substrate of choice will be dictated for the most part by the particular application. Polyethylene terephthalate and polypropylene films are in wide use as base materials for magnetic recording media. Where heat resistance is an important consideration, a polyimide film, polyamide film, polyarylether film, or the like may be utilized. In the case of a polyester film as a thin base, it is often used after monoaxial or biaxial orientation. It is likewise well known that pretreatment of the film may be beneficial to promote wetting and adhesion.

Composition of the magnetic coating layer

The magnetic particles may be any of those known and useful in conventional magnetic recording media. Representative examples include acicular or granular $\gamma$-$Fe_2O_3$, $Fe_3O_4$, Co-doped $\gamma$-$Fe_2O_3$, Co-doped $\gamma$-$Fe_2O_3$-$Fe_3O_4$ solid solution, Co-base-compound-adsorbed $\gamma$-$Fe_2O_3$, a Co-base-compound-adsorbed $Fe_3O_4$ (including those oxidized to an intermediate state between itself and $\gamma$-$Fe_2O_3$), and acicular $CrO_2$. (The term "Co-base compound" as used herein means cobalt oxide, cobalt hydroxide, cobalt ferrite, cobalt ion-adsorbates and the like which enable the magnetic particules to take advantage of the magnetic anisotropy of cobalt in improving its coercive force). Also, the magnetic particle may be a ferromagnetic metal element or alloy, such as Co, Fe-Co, Fe-Co-Ni, or the like. Such a fine magnetic particle is prepared in a number of ways, including wet reduction of the starting material with a reducing agent such as $NaBH_4$, a treatment of the iron oxide surface with a Si compound and subsequent dry reduction with $H_2$ gas or the like, and vacuum evaporation in a low-pressure argon gas stream. Fine particles of monocrystalline barium

ferrite may be employed as well. The fine magnetic powder is used in the form of acicular or granular particles, depending on the application of the resulting magnetic recording medium.

It will be generally desirable to utilize a relatively large amount of magnetic particles in the coating layer. Typical compositions of the coating layer will thus include about 65 or 70 to about 85 or 90 percent magnetic particles, based upon the total weight of the coating layer. As is known, it is desirable to utilize pigment particles of relatively uniform size, with typically used particles having a long axis of about 0.4 micron or even less being employed.

The remainder of the coating layer will comprise the binder system, including the hardening resin, and typically an elastomeric polymer, a dispersant, a crosslinker and any auxiliary agents. Depending upon the novel phosphorylated material of the present invention which is utilized, the dispersant as such may be minimized or even eliminated. Further, when satisfactorily electron beam radiation curable materials are used, the crosslinking agent need not be employed.

Accordingly, and conceptually, in addition to the pigment particles, the only additional essential component in accordance with this invention is the hardening resin itself. Typical coating layers will, however, often include the additional components identified depending upon the particular end use application. As is apparent from the amount utilized in typical formulations of the pigment particles, the remainder of the coating layer will generally represent about 10 or 15 to 30 or 35 percent by weight of the coating layer.

As has been previously discussed, the binder system will generally desirably include an elastomeric polymer in an amount sufficient to provide the coating layer with the desired resilience and the like. Many elastomeric polymers suitable for this purpose are known and may be utilized. Polyester urethanes are often preferred for high performance applications. Suitable materials are commercially available. These materials may be, in general, described as the reaction products of polyester polyols, short chain diols, and isocyanates. These resins have excellent toughness and abrasion resistance characteristics.

A wide variety of polyisocyanate crosslinkers are known and may be used. As one example, it is suitable to use toluene diisocyanate (TDI). The amount of the crosslinking agent used is typically about 20 to 30 percent of the amount that would be required stoichiometrically.

As is known, a variety of auxiliary agents are sometimes employed in the magnetic coating layer. Such additives are known and may be employed, if desired for the particular application. Examples of such auxiliary agents include antistatic agents, lubricants, sensitizers, levelling agents, wear-resisting agents, and film-reinforcing agents.

In accordance with the present invention, the magnetic coating layer utilizes the phosphorylated materials of the present invention to provide the necessary dispersing and orientation characteristics of the coating, and, in some instances, function as the hardening resin as well. If the phosphorylated material has characteristics which provide the necessary modulus and the like for the magnetic coating layer, no other hardening resin need be employed. However, if desired, the phosphorylated materials of the present invention can be utilized with compatible hardening resins to provide the desired magnetic coating layer.

In accordance with this invention, the use of the phosphorylated materials of the present invention should provide improved dispersion and orientation characteristics. However, if desired, other conventional dispersing agents may be employed.

## Preparation of Coating

The recording medium may generally be prepared by dissolving the binder system in a sufficiently volatile vehicle to provide a coatable dispersion of fine magnetizable particles. The dispersion can then be coated onto the substrate to provide a coating thereon. The magnetic recording medium may be prepared by methods described in the art such as in, for example, S. Tochihara, "Magnetic Coatings and their Applications in Japan", Progress in Organic Coatings, 10 (1982), pages 195 to 204.

## Post-Additive Treatment

In accordance with yet another aspect of the present invention, the phosphorylated materials of the present invention may be utilized to, in effect, rejuvenate the decayed properties of magnetic coatings stored for some time prior to usage. Often after storage, magnetic coatings which exhibited satisfactory dispersion during preparation possess undesirable orientation characteristics when processed to form a tape or the like due to change in the coating during storage. The addition of appropriate phosphorylated materials of the present invention will, without a repetition of the high energy mixing techniques used to prepare the magnetic coating in the first instance, allow the coating to provide adequate magnetic

properties upon orientation.

When used in this fashion, it is preferred to utilize the lower molecular weight phosphorylated materials of this invention. Suitable materials will generally have a molecular weight of less than about 4000. In general, the lower molecular weight materials are more effective. It is thus preferred to utilize the phosphorylated lactone-adducts and phosphorylated vinyl resins having a number average molecular weight of less than 4000.

Usage of these materials can provide substantial restoration of the properties and should achieve more than adequate orientation, as is evidenced by the squareness measurement. Selected usage of these materials as a post-additive provides the further advantage that there is no blooming or migration of the additive. To this end, the phosphorylated vinyl resins are particularly desired for use in binder systems which are to be isocyanate cured because of the presence of residual hydroxyl groups on the vinyl resin which are capable of being cross-linked and chemically combined in the coating as a result of the isocyanate cure. On the other hand, the lactone-adducts are particularly desired for use in binder systems which are to be cured by electron beam radiation because of the presence of the unsaturated carbon-carbon bonds of the acylate or methacrylate residue. When used in the respective binder systems described, these materials are chemically combined in the cured coating and do not migrate or bloom.

Other Applications

While use of the phosphorylated materials of the present invention provides highly advantageous properties in magnetic recording media and the present invention has been described in conjunction with this application, it should be appreciated that such materials likewise can be utilized as dispersants and/or hardening resins in any other application where the characteristics of such phosphorylated materials could desirably be incorporated. For example, conventional zinc-rich coatings are useful in many applications which require corrosion resistance and the like. Such compositions typically comprise a high percentage of zinc particles (up to 85 to 90 percent by weight of the composition) and a resin together with such optional components as anti-settling agents, thickening agents and water scavengers, as is known. Since many such applications require exposure to high temperatures, the use of the phosphorylated resins of this invention should find advantageous use. For zinc-rich maintenance coatings, and other clear and pigmented coatings, any of the phosphorylated materials of the present invention should provide improved dispersibility and thus improved adhesion to substrates. The phosphorylated materials of this invention can accordingly be readily utilized in conjunction with such coatings.

Indeed, the phosphorylated lactone-adducts of this invention may be desirably used as surfactants in emulsion polymerizations.

Further, the more highly phosphorylated materials of this invention should be water dispersible and thus may be useful in applications where this property would be desirable, such as, for example, in water-borne coatings. Further embodiments of the invention can be found in claims 10, 12 and 13.

EXAMPLES

The following Examples are representative of the present invention, and not in limitation thereof. The starting materials used, the preparation of the magnetic media formulations, and the evaluation techniques utilized in the ensuing Examples were as follows:

Starting Materials

Vinyl Resins

Vinyl Resin A

A commercially available vinyl chloride-vinyl acetate-hydroxypropyl acrylate terpolymer having a number average molecular weight of about 2000, an average hydroxyl content of 4% by weight and a hydroxyl equivalent weight, on a solids basis, of 400.

Vinyl Resin B

A commercially available vinyl chloride-vinyl acetate-hydroxypropyl acrylate terpolymer having a number average molecular weight of about 4000, an average hydroxyl content of 3% by weight and a Tg of

40 °C.

Vinyl Resin C

A commercially available vinyl chloride-vinyl acetate-hydroxypropyl acrylate copolymer having a number average molecular weight of about 8000, an average hydroxyl content of 2.3% by weight, and a Tg of 65 °C.

Vinyl Resin D

A commercially available, partially hydrolyzed vinyl chloride-vinyl acetate copolymer having a number average molecular weight of about 23 000, an average hydroxyl content of 2.3% by weight, and a Tg of 79 °C.

Vinyl Resin E

A commercially available, partially hydrolyzed vinyl chloride-vinyl acetate copolymer having a number average molecular weight of about 23 000, an average hydroxyl content of 5% by weight, and a Tg of 79 °C.

Vinyl Resin F

A partially-hydrolyzed vinyl chloride-vinyl acetate-maleic acid terpolymer having a number average molecular weight of about 20 000, an average hydroxyl content of 2% by weight, and a Tg of 74 °C.

Lactone-adduct

A lactone-adduct made from hydroxyethyl acrylate and epsilon-caprolactone and having an average of two caprolactone units per acrylate.

Elastomer A

B.F. Goodrich "Estane® 5701 F-1" polyester polyurethane elastomer having a specific gravity of 1.21, a Tg of -25 °C. and a Brookfield viscosity of 300 mPa.s. for a 15% total solids solution in tetrahydrofuran.

Preparation Of The Magnetic Media Formulations

Formulations were prepared by premixing 134 grams of a 15 percent cyclohexanone solution of the resin with 160 grams of cyclohexanone and adding 200 grams of cobalt-modified, iron oxide magnetic pigment with particles having a long axis of about 0.4 micron ("PFERRICO® 2566" magnetic pigment, Pfizer, Inc.). After the mixture was well blended with an air stirrer for 15-30 minutes, the resulting slurry was added to a Premier Mill filled with 1.3mm glass beads and milled for about one hour.

Those formulations containing only vinyl or phenoxy resins, including the phosphorylated derivatives of the present invention, were discharged at this point and evaluated. Those containing Elastomer A were stopped at this stage, and the Elastomer A was added (134 grams of a 15% solution in cyclohexanone). The formulation was then milled for an additional hour and discharged.

Any post-additions were made at this stage by mixing the ingredients by hand with a spatula or a stirring rod. The percentages in such post-additions are all based upon the weight of the pigment in the formulation.

Magnetic Media Evaluations

Gloss

This was evaluated by preparing a (1 mil) drawdown on glass, allowing the formulation to air dry and then measuring the gloss with a 60 ° gloss meter.

Squareness

This was measured by preparing a 76.2 µm (3 mil) wet drawdown on a Mylar substrate and then pulling the Mylar across a bar magnet to orient the magnetic particles. Squareness was then measured on a 2X2 inch piece of this oriented coating using a LDJ Model 7000A B-H Meter. According to the pigment manufacturer, the maximum squareness achievable with the magnetic pigment utilized is 0.84.

EXAMPLES 1-14

These Examples show the preparation of novel phosphate esters in accordance with this invention prepared from vinyl resins and the lactone-adduct.

These phosphate esters were prepared by dissolving the vinyl resin or the lactone-adduct precursor in an aprotic solvent, either acetone or cyclohexanone, and adding phosphorus pentoxide with stirring. The reaction was carried out at room temperature with stirring for 24 hours or until all of the phosphorus pentoxide had been dissolved, whichever was longer. All of the samples were stored at room temperature until used. All of the samples were used without further purification, with the exception of Example 7 which was precipitated from acetone, washed with warm water and dried in a vacuum oven to a constant weight.

Table I sets forth the starting materials used, the percent of phosphorus pentoxide being based upon the weight of the starting material, and the percent substitution being the theoretical percentage of the initial hydroxyl groups present converted to phosphate esters, assuming that 3 phosphate esters are produced from each $P_2O_5$ molecule:

TABLE I

| EXAMPLE | STARTING MATERIAL | % $P_2O_5$ | % SUBSTITUTION |
|---|---|---|---|
| 1 | Vinyl Resin A | 4 | 32 |
| 2 | Vinyl Resin A | 1 | 8 |
| 3 | Vinyl Resin A | 2 | 16 |
| 4 | Vinyl Resin A | 5 | 40 |
| 5 | Vinyl Resin A | 7.5 | 60 |
| 6 | Vinyl Resin B | 3.3 | 40 |
| 7 | Vinyl Resin C | 6 | 100 |
| 8 | Vinyl Resin D | 0.5 | 11 |
| 9 | Vinyl Resin D | 1.0 | 22 |
| 10 | Vinyl Resin D | 1.3 | 22 |
| 11 | Vinyl Resin D | 2.5 | 55 |
| 12 | Vinyl Resin D | 4.0 | 81 |
| 13 | Vinyl Resin E | 3.3 | 24 |
| 14 | Lactone-adduct | 14 | 100 |

EXAMPLES 15-16

EXAMPLE 15

As noted above, the reaction product of Example 7 (Resin C) was purified according to the following procedure. About 80 ml of the Example 7 solution was rapidly stirred while an equal volume of 80/20 mixture of isopropanol/$H_2O$ was slowly added. A precipitate formed. After stirring for 20 minutes at room temperature, 160 ml of $H_2O$ were added and the mixture stirred for about an additional about 20 minutes. The precipitate was collected by filtration, washed twice with warm water and dried at 50°C. under vacuum to constant weight. It was found by atomic adsorption spectroscopic analysis of the precipitate that the Vinyl Resin C phosphate contained 0.34% by weight phosphorus.

EXAMPLE 16

A 15% solution of Vinyl Resin D in 500 g cyclohexanone was reacted with 4g of $P_2O_5$ with stirring at room temperature. After 24 hours from the start of the reaction, a portion of the solution was precipitated by slowly adding the solution to about five times its volume of ice water in a running blender. The resulting polymer was collected by filtration, washed several times with warm water, and dried to constant weight in a

vacuum oven at 40-50° C. The polymer was analyzed for phosphorus content and found to contain 0.4% phosphorus by weight of the polymer by atomic adsorption spectroscopic analysis. The same precipitation was carried out on another part of the sample 48 hours after the first sampling, that is, 72 hours from the start of the phosphorylating reaction; and the phosphorus content, by weight, was found to be the same within experimental error.

EXAMPLES 17-25

These Examples illustrate the improved characteristics achieved with the novel phosphorylated materials of the present invention as compared with the starting resins.

Coatings were made as has been hereinbefore described from the starting resins and from the novel phosphorylated resin reaction products prepared in Examples 1 and 6-13. No dispersants were added to either the controls or to the phosphorylated resins. The gloss and squareness characteristics are set forth in Table II:

TABLE II

| EXAMPLE NO. | RESIN | 60°GLOSS | SQUARENESS |
|---|---|---|---|
| Control | Vinyl Resin A | 60 | 0.82 |
| 17 | Ex. 1 | 102 | 0.84 |
| Control | Vinyl Resin B | 34 | 0.82 |
| 18 | Ex. 6 | 71 | 0.82 |
| Control | Vinyl Resin C | 53 | 0.82 |
| 19 | Ex. 7 | 104 | 0.84 |
| Control | Vinyl Resin D | 59 | 0.78 |
| 20 | Ex. 8 | 52 | 0.82 |
| Control | Vinyl Resin D | 59 | 0.78 |
| 21 | Ex. 9 | 65 | 0.82 |
| Control | Vinyl Resin D | 59 | 0.78 |
| 22 | Ex. 10 | 65 | 0.82 |
| Control | Vinyl Resin D | 59 | 0.78 |
| 23 | Ex. 11 | 58 | 0.84 |
| Control | Vinyl Resin D | 59 | 0.78 |
| 24 | Ex. 12 | 62 | 0.83 |
| Control | Vinyl Resin E | 57 | -- |
| 25 | Ex. 13 | 73 | 0.83 |

As can be seen, the novel phosphorylated materials of the present invention provide coatings with higher gloss and/or improved squareness in all instances, relative to the starting resin. Squareness for Vinyl Resin E was not measured.

EXAMPLES 26-30

These Examples demonstrate the dispersion characteristics of the phosphorylated vinyl resins of the

present invention in the presence of Elastomer A, the amount of Elastomer A added to the coating being that set forth in the general preparation. The results are set forth in Table III:

| TABLE III | | | |
|---|---|---|---|
| EXAMPLE NO. | RESIN | GLOSS | SQUARENESS |
| 26 | Vinyl Resin D | 50 | 0.74 |
| 27 | Ex. 8 | 58 | 0.75 |
| 28 | Ex. 9 | 61 | 0.76 |
| 29 | Ex. 10 | 42 | 0.81 |
| 30 | Ex. 11 | 40 | 0.82 |

As can be seen from these Examples, the phosphorylated vinyl resins of the present invention provide improved dispersion and magnetic characteristics to a magnetic coating compared to their parent, unphosphorylated, resins.

EXAMPLE 31

These Examples demonstrate the utility of the phosphorylated lactone-adducts of the present invention as a dispersant in a magnetic coating.

Coatings were made from Vinyl Resin D and the gloss and squareness characteristics of such coatings were compared to coatings to which the lactone-adduct phosphate of the present invention has been added. The results are set forth in Table IV:

TABLE IV

| EXAMPLE NO. | RESIN | % LACTONE-ADDUCT PHOSPHATE | GLOSS | SQUARENESS |
|---|---|---|---|---|
| Control | Vinyl Resin D | 0 | 59 | 0.78 |
| 31 | Vinyl Resin D | 2 | 61 | 0.85 |

As can be seen from Table IV, the use of the lactone-adduct phosphate of this invention results in both enhanced gloss and squareness.

EXAMPLES 32-35

These Examples illustrate the function of the lactone-adduct phosphates of the present invention as a post-additive dispersant to improve the squareness of a previously prepared formulation.

Magnetic coatings using the elastomeric polymer (Elastomer A) and Vinyl Resin F were prepared. The squareness of the formulation was evaluated in comparison with this formulation to which varying amounts of the lactone-adduct phosphate of the present invention had been added as a post-additive. The results achievable with a prior art surfactant are set forth for comparative purposes. The results are set forth in Table V:

TABLE V

| EX.NO. | BINDER COMPOSITION | SQUARENESS |
|---|---|---|
| Control | 10% Vinyl Resin F, 10% Elastomer A | 0.69 |
| 32 | Control + 5% lactone-adduct phosphate | 0.83 |
| 33 | Control + 2.5% lactone-adduct phosphate | 0.80 |
| 34 | Control + 1.2% lactone-adduct phosphate | 0.73 |
| 35 | Control + 0.6% lactone-adduct phosphate | 0.71 |
| Prior Art | Control + 5% "GAFAC® RE-610 Surfactant" | 0.84 |

As shown, the post-addition of the lactone-adduct phosphate of the present invention enhances the squareness characteristic of the magnetic coating. While the prior art surfactant likewise provides such improvement, the use of the lactone-adduct phosphate of the present invention obviates the known migration problem of the prior art surfactant in electron beam curable binder systems.

EXAMPLES 36-38

These Examples demonstrate the effectiveness of the phosphorylated vinyl resins of the present invention as post-additives.

Magnetic coatings were prepared utilizing a 50-50 mixture of Vinyl Resin F and Elastomer A. The squareness of this control was then evaluated in comparison to the post-addition treatment with equivalent amounts of Vinyl Resin A and the phosphorylated products of Examples 3-5, as well as with the result obtained with a prior art surfactant. The results are set forth in Table VI:

TABLE VI

| EXAMPLE NO. | ADDITIVE | % PHOSPHORYLATION | SQUARENESS |
|---|---|---|---|
| Control | - | - | 0.72 |
| Control | 4% Vinyl Resin A | - | 0.74 |
| 36 | 4% - Ex. 3 | 16 | 0.76 |
| 37 | 4% - Ex. 4 | 40 | 0.78 |
| 38 | 4% - Ex. 5 | 60 | 0.83 |
| Prior Art | 4% GAFAC® RE-610 | - | 0.84 |

As can be seen, the use of the phosphorylated vinyl resin of this invention enhances the squareness characteristics of the magnetic coating. The vinyl resins are especially useful in isocyanate cure binder systems and obviate the known migration or blooming problem of the prior art surfactant due to the cross-linking of the vinyl resin during isocyanate cure of the binder system.

## Claims

**1.** A composition comprising a phosphorylated member selected from

a) a vinyl chloride copolymer or terpolymer having a number average molecular weight of at least 1000 and at least about 0.1 percent by weight hydroxyl groups present in said vinyl chloride copolymer or terpolymer or present in the monomers from which the vinyl chloride copolymer or terpolymer is prepared prior to the phosphorylation, selected from

(i) vinyl chloride-vinyl ester copolymers and terpolymers wherein at least some of said vinyl ester groups are hydrolyzed, said vinyl ester being an ester of a saturated carboxylic acid having from 1 to 6 carbon atoms, and

(ii) a hydroxy-functional copolymer or terpolymer of vinyl chloride, a hydroxyalkyl acrylate or methacrylate having from 2 to 5 carbon atoms in the alkyl segment and a vinyl ester of a saturated carboxylic acid having from 1 to 6 carbon atoms,

a sufficient percentage of the hydroxyl groups present in said monomers or the resulting vinyl chloride copolymer or terpolymer having been phosphorylated to provide at least 0.03 percent phosphorus, based upon the weight of said vinyl chloride copolymer or terpolymer, and

b) a hydroxyalkyl acrylate- or methacrylate-lactone adduct having the following formula:

$$CH_2 = \overset{R^3}{\overset{|}{C}} - \underset{O}{\underset{\|}{C}} - O - R^4 - O\,[\overset{O}{\overset{\|}{C}} - (\underset{R^5}{\underset{|}{\overset{R^5}{\overset{|}{C}}}})_x - O]_y\,H$$

wherein $R^3$ is hydrogen or methyl, $R^4$ is an alkyl group of 2 to 10 carbon atoms, $R^5$ is hydrogen or an alkyl group of from 1 to 12 carbon atoms, x is from 4 to 7 and y is from 1 to 10,

the phosphorus moiety of the phosphorylated hydroxyl groups of said vinyl resins (a) and lactone-adducts (b) being characterized by the formula:

$$- \overset{O}{\overset{\|}{P}} - (OR^6)_2$$

wherein $R^6$ comprises hydrogen, an alkyl or alkenyl radical having from 1 to 20 carbon atoms, an alkyl acrylate or methacrylate residue having from 2 to 10 carbon atoms in the alkyl segment, substituted and unsubstituted phenyl, the lactone-adduct (b), or mixtures thereof.

**2.** The composition of claim 1 wherein the number average molecular weight of said vinyl chloride copolymer or terpolymer is at least about 2000, particularly at least about 4000, preferably at least about 8000, and more preferably at least about 23000.

**3.** The composition of any one of claims 1 or 2 wherein said vinyl chloride copolymer or terpolymer has a molar ratio of from 28 to 32 vinyl chloride to 0.5 to 8 vinyl alcohol and to 0 to 4 vinyl ester.

**4.** The composition of any one of claims 1 to 3, wherein said vinyl chloride copolymer or terpolymer is a hydroxy-functional copolymer or terpolymer with a molar ratio of from 12 to 20 vinyl chloride to 1 to 3 hydroxyalkyl acrylate or methacrylate and to 0 to 3 vinyl ester.

**5.** The composition of claims 3 or 4 wherein said vinyl ester is vinyl acetate.

**6.** The composition of claim 4 or 5 wherein said vinyl chloride copolymer or terpolymer is a vinyl chloride-hydroxyethyl acrylate copolymer, vinyl chloride-hydroxypropyl acrylate copolymer, vinyl chloride-hydroxyethyl acrylate-vinyl acetate copolymer, or vinyl chloride-hydroxypropyl acrylate-vinyl acetate terpolymer.

**7.** The composition of any one of claims 1 to 6, wherein a sufficient percentage of the hydroxyl groups present are phosphorylated to provide at least 0.1 percent, preferably at least about 0.3% by weight phosphorus.

**8.** The composition of claim 1 wherein the hydroxyalkyl acrylate or methacrylate-lactone adduct is a hydroxyethyl acrylate adduct, a hydroxyethyl methacrylate adduct, a hydroxypropyl acrylate adduct, or a hydroxypropyl methacrylate adduct.

**9.** The composition of claim 8 wherein the hydroxyalkyl acrylate or methacrylate-lactone adduct is an adduct of hydroxyethyl acrylate and epsilon-caprolactone and wherein y in the formula of claim 1 has an average value of from about 1 to 4, preferably about 2.

**10.** A dispersion comprising a medium, particles dispersed therein and a composition according to any one of claims 1 to 9 present in an amount sufficient to enhance the extent of dispersion of said particles in said medium.

**11.** The dispersion of claim 10, wherein said particles are zinc particles.

**12.** A magnetic recording medium comprising a substrate and a magnetic recording layer thereon comprising a cured binder system and magnetic particles, said binder system having included therein a composition according to any one of claims 1 to 9 present in an amount sufficient to enhance the dispersion characteristics of said magnetic recording layer.

**13.** A method of enchancing the magnetic properties of a magnetic coating comprising a binder system and magnetic particles dispersed therein following storage thereof, which comprises adding to said magnetic coating a composition according to any one of claims 1 to 9 in an amount sufficient to enhance the magnetic properties thereof.

**Revendications**

**1.** Composition comprenant un composant phosphorylé choisi entre

a) un copolymère ou terpolymère de chlorure de vinyle ayant une moyenne en nombre du poids moléculaire d'au moins 1000 et comprenant au moins environ 0,1 % en poids de groupes hydroxyle présents dans le copolymère ou terpolymère de chlorure de vinyle ou présent dans les monomères à partir desquels le copolymère ou le terpolymère de chlorure de vinyle est préparé avant la phosphorylation, choisi entre

(i) des copolymères et terpolymères chlorure de vinyle-ester de vinyle dans lesquels au moins une partie desdits groupes ester de vinyle sont hydrolysés, ledit ester de vinyle étant un ester d'un acide carboxylique saturé ayant 1 à 6 atomes de carbone et

(ii) un copolymère ou terpolymère à fonctionnalité hydroxy de chlorure de vinyle, d'un acrylate ou d'un méthacrylate d'hydroxyalkyle ayant 2 à 5 atomes de carbone dans le segment alkyle et d'un ester vinylique d'un acide carboxylique saturé ayant 1 à 6 atomes de carbone,

un pourcentage suffisant des groupes hydroxyle présents dans lesdits monomères ou dans le copolymère ou terpolymère de chlorure de vinyle résultant ayant été phosphorylé de manière à introduire au moins 0,03 % de phosphore, sur la base du poids dudit copolymère ou terpolymère de chlorure de vinyle, et

b) un produit d'addition d'acrylate ou méthacrylate d'hydroxyalkyle et de lactone répondant à la formule suivante :

A page 1

dans laquelle $R^3$ est l'hydrogène ou un groupe méthyle, $R^4$ est un groupe alkyle de 2 à 10 atomes de carbone, $R^5$ est l'hydrogène ou un groupe alkyle de 1 à 12 atomes de carbone, x a une valeur de 4 à 7 et y a une valeur de 1 à 10,

la portion contenant du phosphore des groupe hydroxyle phosphorylés desdites résines vinyliques (a)

et desdits produits d'addition de lactone (b) étant caractérisée par la formule :

$$-\overset{\overset{\large O}{\|}}{P} - (OR^6)_2$$

dans laquelle $R^6$ représente l'hydrogène, un radical alkyle ou alcényle ayant 1 à 20 atomes de carbone, un résidu acrylate ou méthacrylate d'alkyle ayant 2 à 10 atomes de carbone dans le segment alkyle, un groupe phényle substitué ou non substitué, le produit d'addition de lactone (b), ou leurs mélanges.

**2.** Composition suivant la revendication 1, dans laquelle la moyenne en nombre du poids moléculaire dudit copolymère ou terpolymère de chlorure de vinyle est au moins égale à environ 2000, en particulier au moins égale à environ 4000, mieux encore au moins égale à environ 8000 et notamment au moins égale à environ 23 000.

**3.** Composition suivant l'une quelconque des revendications 1 et 2, dans laquelle le copolymère ou terpolymère de chlorure de vinyle a un rapport molaire de 28 à 32 moles de chlorure de vinyle pour 0,5 à 8 moles d'alcool vinylique et 0 à 4 moles d'ester de vinyle.

**4.** Composition suivant l'une quelconque des revendications 1 à 3, dans laquelle ledit copolymère ou terpolymère de chlorure de vinyle est un copolymère ou terpolymère à fonctionnalité hydroxy avec un rapport molaire de 12 à 20 moles de chlorure de vinyle pour 1 à 3 moles d'acrylate ou de méthacrylate de 3-hydroxyalkyle et 0 à 3 moles d'ester de vinyle.

**5.** Composition suivant la revendication 3 ou 4, dans laquelle ledit ester de vinyle est l'acétate de vinyle.

**6.** Composition suivant la revendication 4 ou 5, dans laquelle ledit copolymère ou terpolymère de chlorure de vinyle est un copolymère de chlorure de vinyle et d'acrylate d'hydroxyéthyle, un copolymère de chlorure de vinyle et d'acrylate d'hydroxypropyle, un copolymère de chlorure de vinyle, d'acrylate d'hydroxyéthyle et d'acétate de vinyle, ou un terpolymère de chlorure de vinyle, d'acrylate d'hydroxypropyle et d'acétate de vinyle.

**7.** Composition suivant l'une quelconque des revendications 1 à 6, dans laquelle un pourcentage suffisant des groupes hydroxyle présents sont phosphorylés de manière qu'il y ait au moins 0,1 %, de préférence au moins environ 0,3 %, en poids de phosphore.

**8.** Composition suivant la revendication 1, dans laquelle le produit d'addition d'acrylate ou méthacrylate d'hydroxyalkyle et de lactone est un produit d'addition d'acrylate d'hydroxyéthyle, un produit d'addition de méthacrylate d'hydroxyéthyle, un produit d'addition d'acrylate d'hydroxypropyle ou un produit d'addition de méthacrylate d'hydroxypropyle.

**9.** Composition suivant la revendication 8, dans laquelle le produit d'addition d'acrylate ou méthacrylate d'hydroxyalkyle et de lactone est un produit d'addition d'acrylate d'hydroxyéthyle et d'epsilon-caprolactone et y, dans la formule de la revendication 1, a une valeur moyenne d'environ 1 à 4, de préférence environ 2.

**10.** Dispersion comprenant un milieu, des particules dispersées dans ce milieu et une composition selon l'une quelconque des revendications 1 à 9 présente en une quantité suffisante pour améliorer le degré de dispersion desdites particules dans ledit milieu.

**11.** Dispersion suivant la revendication 10, dans laquelle lesdites particules sont des particules de zinc.

**12.** Support d'enregistrement magnétique comprenant un substrat portant une couche d'enregistrement magnétique comprenant un système de liant mûri et des particules magnétiques, ledit système de liant renfermant une composition selon l'une quelconque des revendications 1 à 9 présente en une quantité

suffisante pour améliorer les caractéristiques de dispersion de ladite couche d'enregistrement magnétique.

**13.** Procédé pour améliorer les propriétés magnétiques d'un revêtement magnétique, comprenant un système de liant et des particules magnétiques dispersées dans ce système à la suite de son entreposage, qui consiste à ajouter audit revêtement magnétique une composition suivant l'une quelconque des revendications 1 à 9 en une quantité suffisante pour améliorer ses propriétés magnétiques.

## Patentansprüche

**1.** Zusammensetzung, umfassend ein phosphoryliertes Element, das ausgewählt ist aus

a) einem Vinylchlorid-Copolymer oder -Terpolymer mit einem Zahlenmittel des Molekulargewichts von mindestens 1000 und mindestens etwa 0,1 Gew.-% Hydroxylgruppen, die in dem Vinylchlorid-Copolymer oder -Terpolymer oder in den Monomeren anwesend sind, aus denen das Vinylchlorid-Copolymer oder -Terpolymer vor der Phosphorylierung hergestellt wird, ausgewählt aus

(i) Vinylchlorid/Vinylester-Copolymeren und -Terpolymeren, worin mindestens einige der Vinylestergruppen hydrolysiert sind, wobei die Vinylester Ester einer gesättigten Carbonsäure mit 1 bis 6 Kohlenstoffatomen sind, und

(ii) einem hydroxy-funktionellen Copolymer oder Terpolymer von Vinylchlorid, einem Hydroxyalkylacrylat oder -methacrylat mit 2 bis 5 Kohlenstoffatomen im Alkylsegment und einem Vinylester einer gesättigten Carbonsäure mit 1 bis 6 Kohlenstoffatomen,

wobei ein ausreichender Prozentsatz der in den Monomeren oder dem resultierenden Vinylchlorid-Copolymer oder -Terpolymer anwesenden Hydroxylgruppen phosphoryliert worden ist, um mindestens 0,03% Phosphor, bezogen auf das Gewicht des Vinylchlorid-Copolymers oder -Terpolymers, zu ergeben, und

(b) einem Hydroxyalkylacrylat- oder -methacrylat-Lacton-Addukt der folgenden Formel:

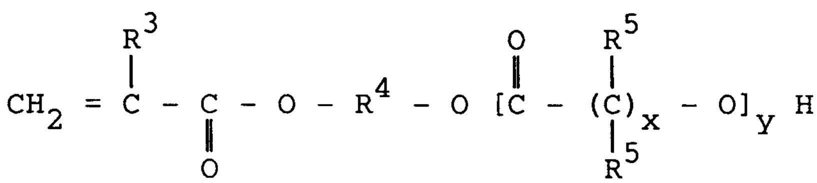

worin $R^3$ Wasserstoff oder Methyl ist, $R^4$ eine Alkylgruppe mit 2 bis 10 Kohlenstoffatomen darstellt, $R^5$ Wasserstoff oder eine Alkylgruppe mit 1 bis 12 Kohlenstoffatomen bedeutet, x 4 bis 7 ist und y 1 bis 10 ist,

wobei die Phosphorgruppierung der phosphorylierten Hydroxylgruppen der Vinylharze (a) und Lacton-Addukte (b) durch die Formel

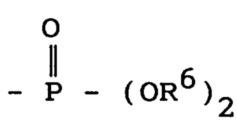

gekennzeichnet ist, worin $R^6$ Wasserstoff, einen Alkyl- oder Alkenylrest mit 1 bis 20 Kohlenstoffatomen, einen Alkylacrylat- oder -methacrylatrest mit 2 bis 10 Kohlenstoffatomen im Alkylsegment, substituiertes und unsubstituiertes Phenyl, das Lacton-Addukt (b) oder Mischungen davon umfaßt.

**2.** Zusammensetzung nach Anspruch 1, worin das Zahlenmittel des Molekulargewichts des Vinylchlorid-Copolymers oder -Terpolymers mindestens etwa 2000, insbesondere mindestens etwa 4000, vorzugsweise mindestens etwa 8000 und besonders bevorzugt mindestens etwa 23000 beträgt.

**3.** Zusammensetzung nach irgendeinem der Ansprüche 1 oder 2, worin das Vinylchlorid-Copolymer oder -Terpolymer ein Molverhältnis von 28 bis 32 Vinylchlorid zu 0,5 bis 8 Vinylalkohol und zu 0 bis 4 Vinylester aufweist.

4. Zusammensetzung nach irgendeinem der Ansprüche 1 bis 3, worin das Vinylchlorid-Copolymer oder -Terpolymer ein hydroxy-funktionelles Copolymer oder Terpolymer mit einem Molverhältnis von 12 bis 20 Vinylchlorid zu 1 bis 3 Hydroxyalkylacrylat oder -methacrylat und zu 0 bis 3 Vinylester beträgt.

5. Zusammensetzung nach Anspruch 3 oder 4, worin der Vinylester Vinylacetat ist.

6. Zusammensetzung nach Anspruch 4 oder 5, worin das Vinylchlorid-Copolymer oder -Terpolymer ein Vinylchlorid/Hydroxyethylacrylat-Copolymer, Vinylchlorid/Hydroxypropylacrylat-Copolymer,Vinylchlorid/Hydroxyethylacrylat/Vinylacetat-Copolymer oder Vinylchlorid/Hydroxypropylacrylat/Vinylacetat-Terpolymer ist.

7. Zusammensetzung nach irgendeinem der Ansprüche 1 bis 6, worin ein ausreichender Prozentsatz der anwesenden Hydroxylgruppen phosphoryliert ist, um mindestens 0,1 Gew.-%, vorzugsweise mindestens etwa 0,3 Gew.-%, Phosphor zu ergeben.

8. Zusammensetzung nach Anspruch 1, worin das Hydroxyalkylacrylat- oder -methacrylat-Lacton-Addukt ein Hydroxyethylacrylat-Addukt, ein Hydroxyethylmethacrylat-Addukt, ein Hydroxypropylacrylat-Addukt oder ein Hydroxypropylmethacrylat-Addukt ist.

9. Zusammensetzung nach Anspruch 8, worin das Hydroxyalkylacrylat- oder -methacrylat-Lacton-Addukt ein Addukt von Hydroxyethylacrylat und epsilon-Caprolacton ist, und worin y in der Formel von Anspruch 1 einen durchschnittlichen Wert von etwa 1 bis 4, vorzugsweise etwa 2, aufweist.

10. Dispersion, umfassend ein Medium, darin dispergierte Teilchen und eine Zusammensetzung nach irgendeinem der Ansprüche 1 bis 10, die in einer ausreichenden Menge vorhanden ist, um den Dispersionsgrad der Teilchen in dem Medium zu erhöhen.

11. Dispersion nach Anspruch 10, worin die Teilchen Zinkteilchen sind.

12. Magnetisches Aufzeichnungsmaterial, umfassend ein Substrat und eine darauf befindliche magnetische Aufzeichnungsschicht, welche ein gehärtetes Bindemittelsystem und magnetische Teilchen umfaßt, wobei das Bindemittelsystem eine Zusammensetzung nach irgendeinem der Ansprüche 1 bis 9 einschließt, die in einer ausreichenden Menge vorhanden ist, um die Dispersionseigenschaften der magnetischen Aufzeichnungsschicht zu verstärken.

13. Verfahren zur Verbesserung der magnetischen Eigenschaften eines magnetischen Überzugs, der ein Bindemittelsystem und darin dispergierte Teilchen umfaßt, nach dessen Lagerung, umfassend die Zugabe einer Zusammensetzung nach irgendeinem der Ansprüche 1 bis 9 zu dem magnetischen Überzug in einer Menge, die ausreicht, um dessen magnetische Eigenschaften zu verbessern.